# EUROPEAN PATENT SPECIFICATION

(11) **EP 1 831 344 B1**
(45) Date of publication and mention of the grant of the patent: **28.12.2011**
(21) Application number: 05857360.1
(22) Date of filing: 21.10.2005
(51) Int. Cl.: C12G 3/08, C12H 1/04

(54) **PROCESS FOR MAKING PURIFIED BEVERAGE PRODUCTS**
VERFAHREN ZUR HERSTELLUNG VON GEREINIGTEN GETRÄNKEPRODUKTEN
PROCEDE PERMETTANT DE PREPARER DES BOISSONS PURIFIEES

(30) Priority: 21.10.2004 US 620843 P
(43) Date of publication of application: 12.09.2007
(73) Proprietor: Diageo North America, Inc, Norwalk, CT 06851 (US)
(72) Inventor: ARMES, Christopher, Hertfordshire SG12 9PJ (GB); SHILTON, Andrew, Essex CM77 7FP (GB)
(74) Representative: Hill, Justin John
(86) International application number: PCT/IB2005/004074
(87) International publication number: WO 2006/097791

(56) References cited:
- EP-A- 0 312 079
- EP-A- 1 297 749
- US-A- 4 440 795
- US-A- 4 775 541
- US-A- 6 001 406
- DATABASE WPI Section Ch, Week 199916 Derwent Publications Ltd., London, GB; Class D13, AN 1999-183788 XP002390774 & JP 11 032724 A (SNOW BRAND MILK PROD CO LTD) 9 February 1999 (1999-02-09)
- DATABASE WPI Section Ch, Week 200426 Derwent Publications Ltd., London, GB; Class D13, AN 2004-279463 XP002390783 & RU 2 224 026 C1 (BEGLOV S YU) 20 February 2004 (2004-02-20)

## Description

### Technical Field

Processes of making purified beverage products are generally provided. More specifically, beverage products are provided that are made using a beverage-making process to form a beverage base. The beverage base is then introduced to a plurality of purification steps, including, but not limited to, molecular-size filtering, ion exchange resins, adsorbent and/or absorbent resins, and charcoal and/or activated carbon to produce a highly purified beverage base having significantly reduced levels of colors, flavors and aroma. The highly purified beverage base may then be converted into beverage products for consumption by adding flavors, sugar, preservatives, carbonation, and/or other ingredients for producing a desired end product. More specifically, brewed and/or fermented beverage products containing a quantity of alcohol therein may be introduced to the plurality of purification steps to form a highly purified alcohol beverage base product. The purification steps may or may not change the alcohol content of the alcohol beverage base.

### Background

It is, of course, well-known to produce beverage products using a plurality of methods. Specifically, beverage products may be produced from a large number of starting ingredients, such as from fruits, grains, honey, and like starting ingredients. Processes for producing beverage products further include brewing and/or fermentation, whereby fruits, grains, honey, and/or other ingredients are brewed and/or fermented under appropriate conditions to form beverage products having an amount of alcohol contained therein.

It is, of course, well-known to ferment and/or brew fermentable products to produce consumable alcohol beverages, such as beer, wine and the like. For example, brewing beer and wine-making trace their roots back thousands of years. Presently, it is well-known to ferment grapes and other fruits to produce wine. Further, it is well-known to ferment malted barley and/or other grains after a brewing process to produce beer. In a typical fermentation and/or brewing process, a consumable alcohol beverage product is generally produced having distinct levels of color, taste and aroma.

It is typically desirable to ferment an alcohol beverage having a good combination of flavor, appearance and wholesomeness. The flavor of a brewed beverage is typically defined as a combination of taste, aroma and mouthfeel. The appearance of a brewed alcohol beverage is typically a combination of color, clarity, foaminess and beading. And the wholesomeness of a brewed alcohol beverage is defined as the absence of hazardous compounds and the presence of useful compounds. Typically, these consumable alcohol beverage products contain relatively high concentrations of flavors, colors, haze-producing compounds, minerals, acids, carbohydrates and proteins. These compounds combine to form each alcohol beverage.

However, although the presence of these compounds may be desirable in many instances to produce unique alcohol beverage products, these compounds may limit the usefulness of these alcohol beverage products in that they contain the sensory attributes that are typical of brewed and fermented beverages. For example, typical brewed and fermented beverages contain such high levels of taste and aroma, that adding other flavors, such as citrus flavors and the like, do not appreciably impact the taste and/or aroma of the final consumable beverage product. Further, it may be difficult to produce an alcoholic beverage having desired flavors, aromas and appearance because of these characteristics. Moreover, typical fermented beverages, such as malted brewed beverages, have fairly limited shelf-lives due to acids and other compounds that can seriously degrade the consumable product over a period of time.

For example, non-fermentable sugars may remain in the fermented and/or brewed beverage product, which can impact the shelf-life, taste and/or aroma of the beverage. Specifically, non-fermentable sugars can influence the mouthfeel given to malt and can impart a doughy character to the beverage.

In addition, typical fermented and/or brewed beverage products generally contain minerals, such as metal ions like iron and/or copper, that can have a detrimental effect on the shelf-lives of fermented and/or brewed beverage products. Moreover, fermented and/or brewed beverage products may contain aromas that are typically caused by oils, esters and/or higher alcohols, such as fusel oils, for example, and the like.

Further, it is well-known to attempt to alter the chemistry of consumable beverage products to change the flavors, aroma, and other characteristics of the beverage product. For example, with respect to alcohol beverage products, traditional methods of altering the beverages include fining, barrel aging, adding sulfur dioxide, or the use of tree resins. Of course, many other methods of materials are used for altering the chemistry of beverage products thereby effecting the taste, aroma or appearance of the beverage product.

Various methods have been derived for reducing and/or removing compounds from fermented and/or brewed beverage products. For example, U.S. Patent No. 4,440,795 to Goldstein et al. discloses a process for producing a stable citrus-flavored alcoholic malt beverage. Specifically, Goldstein et al. disclose a process of subjecting a feed or beer to reverse osmosis employing a membrane having a molecular weight cutoff of up to about 200 to remove substantial amounts of sulfur-containing amino acids and other labile components.

In addition, U.S. Patent No. 4,775,541 to Brown et al. relates to a process by which liquid fermentation products, such as wines, are treated to reduce the coloring matter therein without substantially deleteriously affecting the other vinous qualities contained within the products. The process includes the steps of passing the liquid products through a granular bed of strongly basic microporous anion exchange resin in hydroxyl form to substantially increase the alkalinity of the liquid product, followed by passing the more alkaline liquid product through a granular bed of strongly acidic cation exchange resin in hydrogen form to generally restore its acidity.

U.S. Patent No. 5,294,450 to Word et al. relates to a colorless malt beverage product and a process for making the same. Specifically, the beverage product is produced by decolorizing a fermented product to produce a clear and colorless base which is combined with a sweetener, tartaric acid, a buffer, and a flavoring agent. According to Word et al., the process creates a product having parameters, such as minimal consumer sensations of fullness and excess tartness, sweetness and astringency.

U.S. Patent No. 5,439,699 to Tripp et al. relates to a process of preparing a colorless, clear beer by ultrafiltration of the beer, with the addition of dextrins, bittering agents and a foam enhancer. In addition, processes are disclosed for making flavored malt beverages, including a stable citrus flavored malt beverage.

U.S. Patent No. 6,001,406 to Katzke et al. relates to a process for stabilizing a beverage containing haze-causing substances. Specifically, the method relates to the removal of polyphenols and proteins simultaneously from a beverage by contacting the beverage with an ion exchanger that is capable of adsorbing both types of substances. The ion exchanger is a water-insoluble porous hydrophilic matrix to which ion exchanging groups are covalently bonded.

A need exists for methods of making purified beverage products, wherein compounds associated with taste, aroma and appearance are removed. More specifically, a need exists for methods of making alcohol-containing beverage bases using typical fermentation and/or brewing processes wherein the alcohol-containing beverage base is purified to remove the compounds associated with taste, aroma and appearance. Moreover, a need exists for a method of making a purified beverage product wherein each step of the process is selective to particular compounds, thereby providing a step-wise reduction in compounds from the beverage product. In addition, a need exists for a method of making a purified beverage product wherein compounds selected for removal may be easily monitored to ensure sufficient removal of these compounds from the beverage product.

### Summary of the Invention

Processes of making purified beverage products are generally provided. More specifically, beverage products are provided that are made using a beverage-making process to form a beverage base. The beverage base is then introduced to a plurality of purification steps, including, but not limited to, molecular-size filtering, ion exchange resins, adsorbent and/or absorbent or dual function resins, charcoal and/or activated carbon to produce a highly purified beverage base having significantly reduced levels of colors, flavors and aroma. The highly purified beverage base may then be converted into beverage products for consumption by adding flavors, sugar, preservatives, carbonation, and/or other ingredients for producing a desired end product. More specifically, brewed and/or fermented beverage products containing a quantity of alcohol therein may be introduced to the plurality of purification steps to form a highly purified alcohol beverage base product. The purification steps may or may not change the alcohol content of the alcohol beverage base.

To this end, in an embodiment of the present invention, a process for producing a purified beverage according to claims 1-17 is provided. In one embodiment the process comprises: producing a beverage base; filtering the beverage base using a nanofiltration, process; purifying the beverage base using an ion exchange material; and purifying the beverage base through a material selected from the group consisting of an adsorbent material and an absorbent material. In a preferred embodiment, the beverage base is an alcohol-containing beverage base. The ion exchange resin may be a cation exchange resin. Alternatively, the ion exchange resin may be an anion exchange resin. Moreover, the step of purifying the beverage base using an ion exchange resin may comprise purifying the beverage base through both a cation exchange resin and an anion exchange resin. The alcohol content of the purified beverage made from the present invention may not be substantially different from an alcohol content of the alcohol-containing beverage base. Further, the adsorbent material of the process of the present invention may comprise a material selected from the group consisting of adsorbent resin, charcoal, and activated carbon. A beverage product may be fabricated by adding material to the purified beverage base. The beverage product made from the purified beverage base of the present embodiment may have an increased shelf-life compared to a beverage base made from an unpurified beverage base.

In an alternate embodiment of the present invention, a process is provided comprising the steps of: providing a beverage base; filtering said beverage base using a nanofiltration process to form a first permeate and a first retentate; sending said first permeate through an ion exchange material to form a second permeate and a first eluate; and sending said second permeate through an adsorbent material or an absorbent material to form a third permeate and a second eluate. The beverage base may be an alcohol-containing beverage base. In addition, the ion exchange material may comprise a material selected from the group consisting of a cation exchange material and an anion exchange material. Alternatively, the ion exchange material comprises both a cation exchange material and an anion exchange material. Further, the adsorbent material may comprise a material selected from the group consisting of charcoal, activated charbon, and mixtures of charcoal and activated carbon. Further, the adsorbent material may comprise both an adsorbent resin and a material selected from the group consisting of charcoal, activated carbon, and mixtures of charcoal and activated carbon. The process may further comprise the step of retaining said first retentate. The process may further comprise the step of retaining said first eluate. Moreover, the process may further comprise the step of retaining said second eluate. A beverage product may be made from the purified beverage base described herein.

It is, therefore, an objective of the present invention to provide a beverage base that can be used to produce a consumable beverage product. The beverage-making process produces a beverage base resulting in distinctive odor, taste and/or appearance. After the process of the present invention, a neutral beverage product is produced without such odor, taste and/or appearance.

More specifically, it is an objective of the present invention to produce a flavored alcohol-containing beverage product using a purified fermented alcohol-containing base. This purified alcohol-containing beverage base may be combined with materials such as, for example, flavors, sugar, water, buffers, preservatives, carbonation and/or other ingredients to produce flavored consumable alcohol-containing beverage products.

Moreover, it is an objective of the present invention to produce a purified flavored beverage product having a significantly increased product shelf-life when compared to unpurified or partially purified beverage products. This purification process described herein removes acids, proteins, haze producing compounds, and other components that can, over time, degrade the flavored beverage product. The process of the present invention generally produces a purified and clarified beverage product free of taste, odor, color and/or turbidity.

More specifically, a beverage base having distinctive taste, odor and/or appearance is sent through a series of steps for purifying the beverage base according to the methods described herein. The steps include, but are not limited to, a step for color removal, a step for mineral removal and a step for aroma removal. The step for color removal includes small pore filtration, such as, for example, nanofiltration of the beverage base. The step for demineralization comprises one or more ion exchange resins. The step for aroma removal results in significant or complete removal of aroma compounds, and comprises surface bonding agents. Specifically, the step for aroma removal comprises two stages. Stage one comprises an adsorbent and/or absorbent resin. Stage two comprises charcoal and/or activated carbon. The steps described herein can be performed in any order, although the steps described above provide the most consistent product when produced in the order described above.

Additional features, advantages and objectives of the present invention are described in, and will be apparent from, the detailed description of the presently preferred embodiments and from the drawing.

### Brief Description of the Figures

FIG. I illustrates a flow chart illustrating the general process for making a purified beverage product without taste, odor and appearance characteristics.

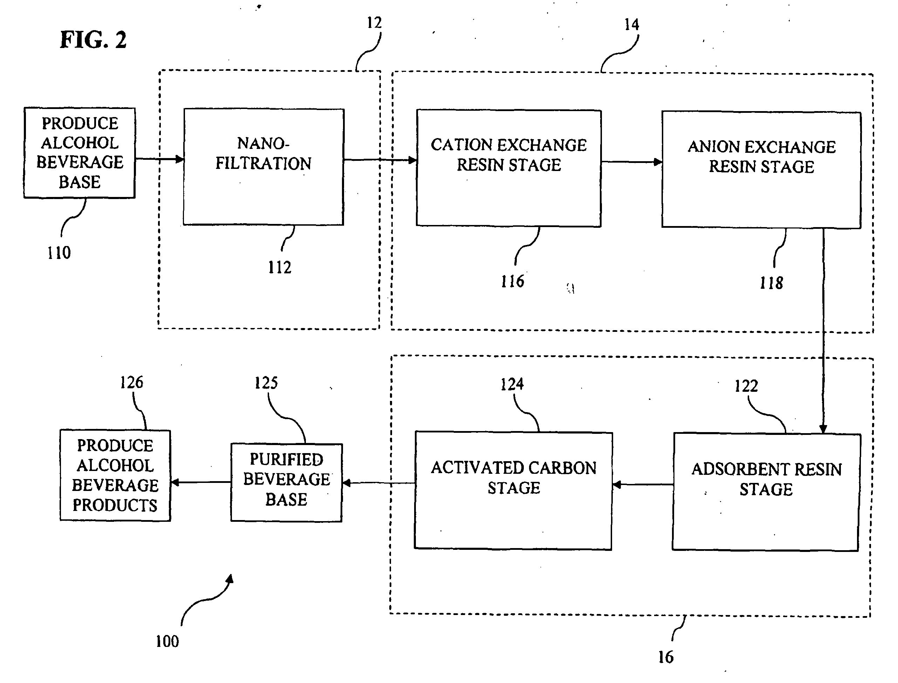

FIG. 2 illustrates an alternate embodiment of a flow chart illustrating the process for making the purified beverage product without taste, odor and appearance characteristics.

### Detailed Description of the Presently Preferred Embodiments

Processes of making purified beverage products are generally provided. More specifically, beverage products are provided that are made using a beverage-producing process to form a beverage base. The beverage base is then introduced to a plurality of purification steps, including, but not limited to, small pore filtering, ion exchange resins, adsorbent and/or absorbent resins, charcoal and/or activated carbon to produce a highly purified beverage base having significantly reduced levels of colors, flavors and aroma. The highly purified beverage base may then be converted into beverage products for consumption by adding flavors, sugar, preservatives, carbonation, and/or other ingredients for producing a desired end product. More specifically, brewed and/or fermented beverage products containing a quantity of alcohol therein may be introduced to the plurality of purification steps to form a highly purified alcohol beverage base product. The purification steps may or may not change the alcohol content of the alcohol beverage base.

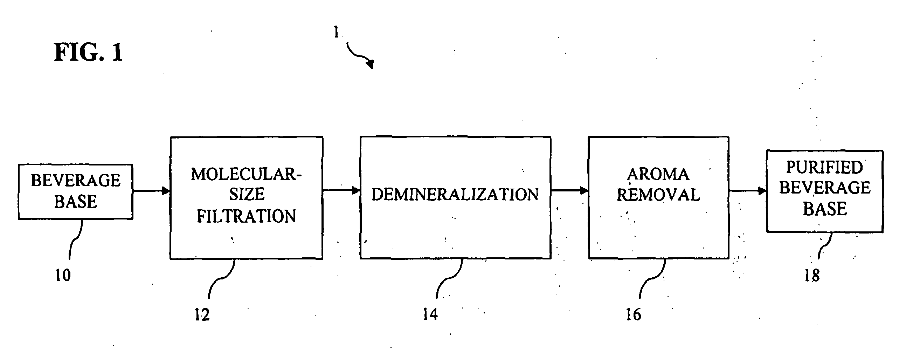

FIG. 1 illustrates a process according to the present invention. Specifically, the process 1 includes, after manufacture of a beverage base 10, a molecular-size filtration step 12, a demineralization step 14 and an aroma removal step 16 for the production of a purified beverage base 18. The beverage base 10 may be any beverage produced by any beverage-making process. For example, the beverage base 10 may be made from fruits, grains, honey, or any other material known for use to form beverage products. Preferably, the beverage base 10 may be an alcohol-containing product, such as a beverage base made from brewing, fermentation and/or distilling processes. More preferably, the beverage base 10 may be any wine, beer, spirit, or any other alcohol-containing beverage product.

The beverage base 10 will contain distinctive taste, aroma and appearance characteristics, such as, for example, color and/or turbidity. When the beverage base 10 is processed through the steps identified herein, the purified beverage base 18 is produced having substantially lower amounts of compounds that cause taste, aroma, color, turbidity, or other beverage characteristics. In a preferred embodiment, a purified beverage base 18 is produced without having taste, aroma, or appearance characteristics.

The beverage base 10 is sent through the steps 12, 14 and 16, as identified above, to remove specific compounds. The molecular-size filtration step 12 removes particular compounds, such as sugars and/or color compounds. For example, the molecular-size filtration may comprise nanofiltration and/or osmotic filtering, although other types of molecular-size filtration may be utilized. Moreover, the molecular-size filtration step 12 may comprise diafiltration to improve alcohol recovery of the process.

In a preferred embodiment, the beverage base 10 is an alcohol-containing beverage base that is manufactured by a fermentation and/or brewing process. The molecular-size filtration step 12 removes non fermentable sugars that may be left in the alcohol-containing beverage base after production of the alcohol-containing beverage base. In addition, the molecular-size filtration step 12 may remove the color compounds within the alcohol-containing beverage base. The impact on the alcohol-containing beverage base is the removal of the mouthfeel given to the beverage base by the nonfermentable sugars, the removal of the dough character associated with the nonfermentable sugars, and the removal of a majority of the color compounds associated with the alcohol-containing beverage base that are present from the fermentation and/or brewing process.

After molecular-size filtration, the beverage base 10 goes through the demineralization step 14, as illustrated in FIG. 1. The demineralization step 14 is designed specifically to remove minerals, such as metal ions, and acid groups from the beverage base 10, although the demineralization step may also be designed and used to remove other compounds, such as residual color compounds. One or more exchange resin may preferably be utilized in the demineralization step 14. For example, a cation exchange resin, an anion exchange resin, Or both may be utilized in the demineralization step 14, according to the present invention.

In a preferred embodiment, where the beverage base 10 is an alcohol-containing beverage base, removal of the metal ions and acid group provides a more consistent product having an extended shelf-life. For example, certain metal ions, such as iron and copper, may have a detrimental effect on the shelf life of a beverage product. The demineralization step 14 removes these compounds. In addition, removal of the metal ions, acid groups and other compounds by the demineralization step 14 may also remove flavor compounds.

The beverage base 10 may go through an aroma removal step 16, as illustrated in FIG. 1, which preferably comprises exposing the beverage base to surface bonding agents. The aroma removal step is designed specifically to remove aroma-causing compounds. However, the aroma removal step 16 may also be utilized to remove other compounds, such as residual color compounds and/or flavor compounds. Preferably, one or more materials may be utilized to remove these compounds. For example, an adsorbent resin, an absorbent resin, a dual function material (having absorbent and adsorbent properties) or combinations thereof may be utilized to remove these compounds. An example of a dual function material is a material that is weakly anionic, but has absorbent properties as well. Moreover, charcoal and/or activated carbon may be utilized to further remove these compounds, either in conjunction with the adsorbent and/or absorbent resins, or alone.

In a preferred embodiment, where the beverage base 10 is an alcohol-containing beverage base, the aroma removal step 16 reduces or eliminates aroma compounds, and further may reduce and/or eliminate any bittering compounds and/or any remaining color compounds.

After the aroma removal step 16, the purified beverage base may be utilized to produce beverage products. In the preferred embodiment, a purified alcohol-containing beverage base may be produced that may be utilized to produce alcohol-containing beverage products, through the addition of flavors, aromas, colors or other materials or compounds. The process described above may preferably be designed not to effect the alcohol content of any alcohol-containing beverage base that may be introduced to the steps described herein. Alternatively, the process specified herein may alter the concentration of an alcohol-containing beverage base. For example, the molecular-size filtration may be osmotic filtering, which could effect the alcohol concentration of an alcohol-containing beverage base.

In a preferred embodiment of the present invention, a process 100 of making a purified fermented and/or brewed flavored alcohol-containing beverage base is illustrated in FIG. 2. In a first step 110, an alcohol-containing beverage base is produced. The alcohol-containing beverage base is typically made by a brewing process, such as via the fermentation of malted barley and/or other grains after brewing process. Alternatively, wine may be produced via the fermentation of grapes or other fruit, whereby fermentable sugars are converted to alcohol in the fermentation process. Of course, any other type of alcohol-containing beverage base may be utilized such as, for example, mead, cider and the like, and the invention should not be limited as herein specified.

After the alcohol-containing beverage base is produced, it is introduced to the molecular-size filtration step 12. Preferably, the alcohol-containing beverage base is filtered by a nanofiltration step 112 to produce a nanofiltered permeate. The nanofiltered permeate may also be produced from recycled fermented alcohol beverage base that is recovered from the regeneration of other filter media described herein to decrease losses of the fermented alcohol beverage base.

Preferably, the nanofiltration step 112 is conducted using a nanofiltration apparatus having a membrane with a filter rating of between about 150 to about 300 Dalton. The filtration is typically conducted under relatively high pressure and temperature, For example, the nanofiltration step 112 maybe conducted using an Osmonics HL series membrane having a Dalton cut-off of between about 150 to 300 Daltons. Preferably, the nanofiltration step 112 may be conducted at pressures of up to about 25 bars (about 365 psi) and temperatures of up to about 80°F.

Typically, about 95% of the input volume to the nanofiltration apparatus is recovered as either permeate or filtrate. Five percent is typically removed as retentate and appropriately destroyed or utilized for the recovery of other compounds, such as maltodextrin. The nanofiltered permeate has an alcohol concentration that is not significantly different from the alcohol concentration of the alcohol-containing beverage base produced via the brewing methods described above.

The membranes utilized should be cleaned periodically using acidic or caustic based detergents, or a combination of caustic and basic detergents. Further, the membranes may be cleaned at elevated temperatures to readily dissolve maltodextrins that may have precipitated on the surface of the nanofiltration membranes.

Nanofiltration of the fermented alcohol beverage base removes the non-fermentable sugars that are left in the alcohol-containing beverage base thereby removing the mouthfeel given to the malt by the non-fermentable sugars. Moreover, removal of the non-fermentable sugars removes the doughy character attributed to the non-fermentable sugars. Nanofiltration also significantly removes coloring compounds from the alcohol-containing beverage base.

A small amount of the permeate may be removed for quality control purposes to confirm the removal of the desired compounds. Preferably, the permeate may be analyzed by monitoring the absorbence of desired compounds in the 420nm and 540nm range. The permeate should have reduced levels of the desired compounds, which may be confirmed by the decrease in the absorbence of the permeate within 420nm and 540nm. Other tests may be utilized to confirm the removal of the desired compounds by the molecular-size filtration step 12. In addition, the flow rate of the permeate may be monitored, which will principally inform whether the filtration apparatus, and the membranes contained therein, must be cleaned.

The alcohol-containing beverage base may then be demineralized in the demineralization step 14. In the preferred embodiment, the demineralization step 14 employs both a cationic ion exchange resin stage 116 and an anion ion exchange resin 118 to remove both metal ions and acid groups from the alcohol-containing beverage base. Although it is preferred that the alcohol-containing beverage base is demineralized first through the cation ion exchange resin followed by demineralization through the anion ion exchange resin, it is not necessary, and the ion exchange resin steps described above can be performed in any order. Through the demineralization step 14, using the cation exchange resin 116 and the anion exchange resin 118, a demineralized permeate is produced. Moreover, an eluate may be removed from the ion exchange resins to retain compounds that may be useful.

Demineralizing the alcohol-containing beverage base removes acid groups that may be present in the alcohol-containing beverage base, thereby providing a more consistent and stable beverage base. Specifically, acid groups can detrimentally affect the stability of the beverage base, such as the flavor of the beverage or the long-term shelf-life of the beverage. Moreover, demineralizing the alcohol-containing beverage base removes metal ions, such as iron and copper ions, that may degrade the beverage and decrease its shelf-life.

Preferably, weakly acidic and basic resins are utilized; however, strongly acidic or basic resins may be appropriate depending on the amounts and/or types of metal ions, color compounds and/or acid groups present within the alcohol-containing beverage base.

To maximize the efficiency of the cationic or anionic exchange resins, it is preferable to operate the flow through the resins in the upwards direction, with the resin bed fluidized and compacted against a retaining plate in the column. Further, it is preferable to regenerate the resins in the downward flow direction. Moreover, a range of regenerant chemicals can be employed, namely hydrochloric acid or sulfuric acid solutions in concentrations of between about 4 percent and about 10 percent by weight for the cationic exchange resins. For the anionic resins, a sodium hydroxide solution having a concentration of between about 4 percent and about 6 percent by weight may preferably be utilized for regeneration of the resin. Occasionally, the cationic and anionic resins may preferably be cross-regenerated, such as regenerating the cation exchange resin with sodium hydroxide solution, in order to aid in the removal of protein molecules removed from the fermented alcohol beverage base that can be adsorbed onto the resin, which may not be removed during the acid regeneration of the cation exchange resin.

It is also preferable to regenerate the anionic exchange resin with a solution of sodium chloride having a concentration of between about 1 percent by weight and about 4 percent by weight sodium chloride. Of course, any other method of regenerating the anionic exchange resin is contemplated by the present invention.

The removal of the metal ions, acid groups and color molecules can be measured using inline conductivity measurements. Preferably, the demineralization step 14 may achieve a 95 percent reduction in conductivity of the demineralized permeate as compared to the input feed of the demineralization step 14.

The fermented alcohol beverage base may be processed through the aroma removal step 16 which enables the complete removal or significant reduction of aroma compounds from the alcohol-containing base through the use of surface-bonding agents. In addition, the aroma removal step 16 may also be utilized to remove any or most residual color compounds from the alcohol-containing beverage base.

The aroma removal step 16 preferably comprises two stages: (1) an adsorbent resin stage 122; and (2) an activated carbon and/or charcoal stage 124. The adsorbent resin stage 122 preferably comprises a highly cross-linked di-vinyl benzene adsorbent resin through which the alcohol-containing beverage base may flow. The adsorbent resin may further have a degree of exchange functionality. Preferably, adsorbent resins that may be utilized include, but are not limited to, Dow Optipore SD2 and Rohm and Hass XAD16HP, although others may be utilized as apparent to one having ordinary skill in the art. Specifically, the adsorbent resin is utilized to remove aroma compounds, residual bittering compounds and/or residual color compounds.

Like the demineralization step 14, described above, the process flow of the alcohol-containing beverage base through the adsorbent in the adsorbent resin stage 22 is preferably in the upwards direction with regeneration of the adsorbent resin in the downwards direction. The adsorbent resin may preferably be regenerated by a hot water rinse, such as hot water having a temperature of between about 70°C and about 80°C, followed by a hot caustic solution, preferably about 4 percent by weight sodium hydroxide solution at about 70°C and about 80°C, to de-adsorb the aroma compounds. Other compounds, such as residual color compounds, may also be removed by the adsorbent resin. A further hot water rinse, with the hot water having a temperature of, preferably, about 70°C and about 80°C, may preferably be employed followed by steam regeneration, under pressure of at least about 25 psi for a period of 3 to 4 hours. Alternatively, the adsorbent resin may be regenerated with an ethanol solution having a concentration of, preferably, between about 40 percent and about 70 percent by volume. Sodium hydroxide may further be employed in the ethanol solution to assist in the removal of coloring molecules. Alternatively, the adsorbent resin may be regenerated by alternating the hot water rinse with the ethanol rinse at a ratio of about 4 hot water rinses for every one ethanol rinse. An eluate may be retained when regenerating the adsorbent resin that may have useful compounds.

The permeate flowing from the adsorbent resin is measured by chemical analysis of the output of the permeate. For example, the permeate may be analyzed by, preferably, in-line uv absorbence of the permeate exiting the adsorbent resin. Specifically, the permeate is preferably monitored at a wavelength of between 240nm and 270nm. In addition, the conductivity of the permeate may be measured as well. Also, collected samples of the permeate may be measured by gas chromotograph for aroma compounds. It should be noted that the measurements detailed herein are merely illustrative and do not limit the present invention in any way. Any analysis may be conducted to confirm the removal of the desired compounds as may be apparent to one having ordinary skill in the art.

The aroma removal step 20 further comprises the charcoal and/or activated carbon stage 24, as illustrated in FIG. 1. Charcoal and/or activated carbon may preferably be employed in the charcoal and/or activated carbon stage 24 to further reduce the aroma molecules present in the alcohol-containing beverage base. After removal of most of the aroma molecules with the adsorbent resin of the adsorbent resin stage 22, a vessel comprising charcoal and/or activated carbon is employed to remove the remaining aroma molecules. The charcoal and/or activated carbon may be in either powder or granular form, although the use of granular form has been found to more completely remove the aroma molecules and is, therefore, preferred. Preferably, coal-based activated carbon is utilized, although others may be utilized as well. Preferable activated carbon that may be utilized in the process described herein is Norit GAC 1240 Plus or Norit SX Ultra, although any other charcoal and/or activated carbon may be utilized as apparent to one having ordinary skill in the art.

The process flow through the charcoal and/or activated carbon is typically in the upwards direction, unless the charcoal and/or activated carbon bed is fluidized, in which case the flow of the alcohol-containing beverage base should be in the downwards direction, so as not to compromise process efficiencies.

Preferably, the charcoal and/or activated carbon is conditioned. Conditioning entails the removal of all air from the charcoal and/or activated carbon vessel to avoid both oxidation of the alcohol in the alcohol-containing beverage base into further aroma compounds such as acetaldehyde and channeling through the vessel.

The charcoal and/or activated carbon can be regenerated using super saturated steam. Preferably, the charcoal and/or activated carbon is regenerated only once with the super saturated steam, since one can expect the loss of up to about 15 percent of the fresh carbon capacity during the steam regeneration process. Also, it is preferable that the steam be free of water treatment chemicals, which can be adsorbed onto the charcoal and/or activated carbon and de-adsorbed by the alcohol-containing beverage base as it travels through the charcoal and/or activated carbon vessel.

The alcohol-containing beverage base can be sent through the adsorbent stage 22 and the charcoal and/or activated carbon stage 24 in any order, although it is preferable that the order as described above is utilized as it is most effective at eliminating aroma compounds and residual color compounds.

Analysis of the permeate from both the adsorbent stage 22 and the charcoal and/or activated carbon stage 24 may inform whether the adsorbent or the activated carbon has become exhausted. Typically, the aroma compounds absorb UV radiation between about 240nm and about 270nm. Therefore, when UV absorbance of the permeate increases in this range, the adsorbent resin and/or the activated carbon should be regenerated.

Processing the alcohol-containing beverage base through either or both of the adsorbent resin or the charcoal and/or activated carbon will not appreciably alter the alcohol content of the fermented alcohol beverage base.

The purification steps 12, 14, and 16 described herein may interchanged and conducted in any order. However, it is preferable that the purification steps be conducted in the order described above to obtain the most desirable product as efficiently as possible.

After the alcohol-containing beverage base has been purified according to the process described above, a purified alcohol-containing beverage base 125 is produced. The purified alcohol-containing beverage base 125 may preferably be further processed to form the alcohol-containing beverage product via step 126. Specifically, a plurality of ingredients are added to form the alcohol-containing beverage product, such as, for example, water, sugar, corn syrup, preservatives, citric and/or phosphoric acids, natural flavors and extracts, buffers to adjust pH, and carbonation. These ingredients may be thoroughly mixed together to form the alcohol-containing beverage product. The alcohol-containing beverage product may be filtered for clarity and thermally treated. The final commercial product may be bottled and capped, or otherwise disposed in a vessel for consumer use.

### Example

The following table illustrates an example of a alcohol-containing beverage base, and analysis of various compounds and properties of the alcohol-containing beverage base during the steps of the filtration process described above, according to the present invention.

**Table 1.**

| | Feed base | After nanofiltration | After cation exchange | After anion exchange | After adsorbent resin | After activated carbon |
|---|---|---|---|---|---|---|
| ABV¹ | 11.35 | 11.24 | 11.12 | 11.21 | 11.08 | 11.06 |
| ABW² | 9.03 | 9.01 | 8.92 | 8.98 | 8.83 | 8.87 |
| Calories | 248.60 | 223.60 | 218.30 | 216.29 | 204.16 | 216.87 |
| Solids | 2.15 | 0.55 | 0.32 | 0.33 | 0.27 | 0.31 |
| pH | 3.75 | 3.87 | 4.81 | 4.56 | 5.59 | 4.17 |
| R.I.³ | 1.34 | 1.33 | 1.34 | 1.34 | 1.34 | 1.34 |
| SpGr@20°C⁴ | 0.99 | 0.99 | 0.99 | 0.99 | 0.99 | 0.99 |
| TA⁵ | 2.90 | 1.29 | 0.25 | 0.16 | 0.06 | 0.07 |
| NTUs⁶ | 0.91 | 0.19 | 0.13 | - | - | - |
| Conductivity | 1581.50 | 876.00 | 11.84 | 23.04 | 23.17 | 31.01 |
| Acetone | 2.50 | 1.04 | 0.41 | 1.00 | 0.65 | 0.81 |
| Ethyl butyrate | - | 1.60 | - | 2.46 | - | 1.98 |
| 2-Butanol | 2.20 | 0.50 | - | 0.50 | - | 0.0 |
| Amyl alcohol | 34.70 | 32.32 | 24.49 | 29.77 | 14.90 | 6.14 |
| Acetaldehyde | 55.80 | 39.71 | 26.54 | 42.82 | 40.8 | 31.56 |
| Butyric acid | - | 18.80 | - | 5.50 | - | 5.70 |
| Ethyl acetate | 47.10 | 44.59 | 32.27 | 49.75 | 23.5 | 9.95 |
| Iso amyl alcohol | 84.30 | 78.08 | 63.55 | 77.88 | 37.10 | 15.43 |
| Iso Propanol | 0.90 | 0.96 | - | 0.73 | - | 0.29 |
| Methanol | 2.13 | 2.48 | 1.95 | 1.73 | 2.20 | 1.94 |
| n-Propanol | 19.60 | 18.46 | 19.20 | 19.60 | 17.80 | 14.53 |
| SPME flavor profile | 2,350,415 | 1,333,926 | 1,319,507 | 1,002,710 | 459,301 | 24,539 |
| n-Butanol | 6.13 | 3.94 | 3.97 | 3.86 | 2.90. | 3.33 |
| n-Pentanol | 2.15 | 0.81 | Trace | 0.65 | Trace | 0.095 |

| | | | | | | |
|---|---|---|---|---|---|---|
| ¹ABV = Alcohol by volume ²ABW = Alcohol by weight ³R.I. = Refractive index ⁴SpGr@20°C = Specific gravity at 20°C ⁵TA = Titratable acidity ⁶NTUs = Nephelometric turbidity units | | | | | | |

In addition, flavored beverage products manufactured with the purified beverage base of the present invention have improved shelf-life properties, as compared to flavored beverage products fabricated from un-purified beverage bases, such as malt beverage bases that have not undergone the purification steps described herein. Specifically, the finished flavoted beverage products made from the un-purified beverage bases develop the following characteristics over time and/or after exposure to increased temperatures: 1) a yellow color; 2) a flat dry or astringent taste; 3) a soupy mouth feel; and 4) a sour or acidic smell. Finished flavored beverage products fabricated from purified beverage bases according to the present invention developed none of these characteristics over time and/or after exposure to increased temperatures.

## Claims

1. A process for producing a purified beverage comprising the following steps in any order:
producing a beverage base;
filtering the beverage base using a molecular-size filtration process selected from nanofiltration, osmotic filtering and diafiltration;
purifying the beverage base using an ion exchange material;
purifying the beverage base through a material selected from the group consisting of an adsorbent material, an absorbent material, a dual-function material, and combinations thereof.

2. The process of claim 1 wherein the beverage base is an alcohol-containing beverage base.

3. The process of claim 1 wherein the step of purifying the beverage base using an ion exchange resin comprises purifying the beverage base through a cation exchange resin.

4. The process of claim 1 wherein the step of purifying the beverage base using an ion exchange resin comprises purifying the beverage base through an anion exchange resin.

5. The process of claim 1 wherein the step of purifying the beverage base using an ion exchange resin comprises purifying the beverage base through both a cation exchange resin and an anion exchange resin.

6. The process of claim 2 wherein an alcohol content of the purified beverage is not substantially different from an alcohol content of the alcohol-containing beverage base.

7. The process of claim 1 wherein the adsorbent material comprises a material selected from the group consisting of adsorbent resin, charcoal, and activated carbon.

8. The process of claim 1 further comprising the step of: producing a beverage product by adding material to the purified beverage.

9. The process of claim 1 wherein:
filtering said beverage base forms a first permeate and a first retentate;
sending said first permeate through an ion exchange material forms a second permeate and a first eluate;
sending said second permeate through the adsorbent material or the absorbent material forms a third permeate and a second eluate.

10. The process of claim 9 wherein the beverage base is an alcohol-containing beverage base.

11. The process of claim 9 wherein the ion exchange material comprises a material selected from the group consisting of a cation exchange material and an anion exchange material.

12. The process of claim 9 wherein the ion exchange material comprises both a cation exchange material and an anion exchange material.

13. The process of claim 9 wherein the adsorbent material comprises a material selected from the group consisting of charcoal, activated carbon, and mixtures of charcoal and activated carbon.

14. The process of claim 9 wherein the adsorbent material comprises both an adsorbent resin and a material selected from the group consisting of charcoal, activated carbon, and mixtures of charcoal and activated carbon.

15. The process of claim 9 comprising the step of:
retaining said first retentate.

16. The process of claim 9 comprising the step of:
retaining said first eluate.

17. The process of claim 9 comprising the step of:
retaining said second eluate.

18. The process of claim 2 wherein the beverage base comprises non-fermentable sugars, metal ions, acid groups and aroma compounds,
wherein said step of filtering the beverage base using the molecular-size filtration process is effective fo substantially remove the non-fermentable sugars from the beverage base,
where said step of purifying the beverage base using the ion exchange material is effective to substantially remove the metal ions and acid groups from the beverage base,
and wherein said step of purifying the beverage base through the material selected from the group consisting of an adsorbent material, an absorbent material, a dual-function material, and combinations thereof is effective to substantially remove the aroma-causing compounds from the beverage base.

## Patentansprüche

1. Verfahren zum Herstellen eines gereinigten Getränks, umfassend die folgenden Schritte in irgendeiner Reihenfolge:
Herstellen einer Getränkebasissubstanz;
Filtrieren der Getränkebasissubstanz unter Anwendung eines Filtrierverfahrens molekularer Größe ausgewählt unter Nanofiltration, osmotischer Filtration und Diafiltration;
Reinigen der Getränkebasissubstanz unter Anwendung eines Ionenaustauschmaterials;
Reinigen der Getränkebasissubstanz durch ein Material ausgewählt aus der Gruppe bestehend aus einem adsorptionsfähigen Material, einem absorptionsfähigen Material, einem Doppelfunktionsmaterial und Kombinationen davon.

2. Verfahren nach Anspruch 1, wobei die Getränkebasissubstanz eine alkoholhaltige Getränkebasissubstanz ist.

3. Verfahren nach Anspruch 1, wobei der Schritt des Reinigens der Getränkebasissubstanz unter Anwendung eines Ionenaustauschharzes das Reinigen der Getränkebasissubstanz durch ein Kationenaustauschharz umfasst.

4. Verfahren nach Anspruch 1, wobei der Schritt des Reinigens der Getränkebasissubstanz unter Anwendung eines Ionenaustauschharzes das Reinigen der Getränkebasissubstanz durch ein Anionenaustauschharz umfasst.

5. Verfahren nach Anspruch 1, wobei der Schritt des Reinigens der Getränkebasissubstanz unter Anwendung eines Ionenaustauschharzes das Reinigen der Getränkebasissubstanz sowohl durch ein Kationenaustauschharz als auch ein Anionenaustauschharz umfasst.

6. Verfahren nach Anspruch 2, wobei ein Alkoholgehalt der gereinigten Getränkebasissubstanz nicht wesentlich von einem Alkoholgehalt der alkoholhaltigen Getränkebasissubstanz verschieden ist.

7. Verfahren nach Anspruch 1, wobei das adsorptionsfähige Material ein Material umfasst ausgewählt aus der Gruppe bestehend aus einem adsorptionsfähigen Harz, Holzkohle und Aktivkohle.

8. Verfahren nach Anspruch 1, des Weiteren umfassend den Schritt des: Herstellens eines Getränkeprodukts durch Hinzugeben von Material zu dem gereinigten Getränk.

9. Verfahren nach Anspruch 1, wobei:
durch das Filtrieren der Getränkebasissubstanz ein erstes Permeat und ein erstes Retentat gebildet werden;
durch das Hindurchschicken des ersten Permeats durch das Ionenaustauschmaterial ein zweites Permeat und ein erstes Eluat gebildet werden;
durch das Hindurchschicken des zweiten Permeats durch das adsorptionsfähige Material oder das absorptionsfähige Material selbst ein drittes Permeat und ein zweites Eluat gebildet werden.

10. Verfahren nach Anspruch 9, wobei die Getränkebasissubstanz eine alkoholhaltige Getränkebasissubstanz ist.

11. Verfahren nach Anspruch 9, wobei das Ionenaustauschmaterial ein Material ausgewählt aus der Gruppe bestehend aus einem Kationenaustauschmaterial und einem Anionenaustauschmaterial umfasst.

12. Verfahren nach Anspruch 9, wobei das Ionenaustauschmaterial sowohl ein Kationenaustauschmaterial als auch ein Anionenaustauschmaterial umfasst.

13. Verfahren nach Anspruch 9, wobei das adsorptionsfähige Material ein Material umfasst ausgewählt aus der Gruppe bestehend aus Holzkohle, Aktivkohle und Mischungen von Holzkohle und Aktivkohle.

14. Verfahren nach Anspruch 9, wobei das adsorptionsfähige Material sowohl ein adsorptionsfähiges Harz als auch ein Material ausgewählt aus der Gruppe bestehend aus Holzkohle, Aktivkohle und Mischungen von Holzkohle und Aktivkohle umfasst.

15. Verfahren nach Anspruch 9, umfassend den Schritt des:
Zurückhaltens des ersten Retentats.

16. Verfahren nach Anspruch 9, umfassend den Schritt des:
Zurückhaltens des ersten Eluats.

17. Verfahren nach Anspruch 9, umfassend den Schritt des:
Zurückhaltens des zweiten Eluats.

18. Verfahren nach Anspruch 2, wobei die Getränkebasissubstanz nicht fermentierbare Zucker, Metallionen, Säuregruppen und Aromaverbindungen umfasst,
wobei der Schritt des Filtrierens der Getränkebasissubstanz unter Anwendung des Filtrierverfahrens von molekularer Größe wirksam ist, die nicht fermentierbaren Zucker im Wesentlichen von der Getränkebasissubstanz zu entfernen,
wobei der Schritt des Reinigens der Getränkebasissubstanz unter Anwendung des Ionenaustauschmaterials wirksam ist, die Metallionen und Säuregruppen im Wesentlichen aus der Getränkebasissubstanz zu entfernen, und
wobei der Schritt des Reinigens der Getränkebasissubstanz durch das Material, das aus der Gruppe ausgewählt ist bestehend aus einem adsorptionsfähigen Material, einem absorptionsfähigen Material, einem Doppelfunktionsmaterial und Kombinationen davon wirksam ist, die Aroma hervorrufenden Verbindungen im Wesentlichen aus der Getränkebasissubstanz zu entfernen.

## Revendications

1. Un procédé pour la production d'une boisson purifiée, comprenant les opérations suivantes effectuées dans un ordre quelconque :
production d'une boisson base ;
filtration de la boisson base à l'aide d'une méthode de filtration de taille moléculaire, sélectionnée parmi les suivantes : nanofiltration, filtration osmotique et diafiltration ;
purification de la boisson base à l'aide d'une matière d'échange ionique ;
purification de la boisson base à travers une matière sélectionnée dans un groupe composé d'une matière adsorbante, d'une matière absorbante, d'une matière bivalente, et de combinaisons de ces dernières.

2. Le procédé conforme à la revendication 1, dans lequel la boisson base est une boisson base alcoolisée.

3. Le procédé conforme à la revendication 1, dans lequel l'opération de purification de la boisson base au moyen d'une résine échangeuse d'ions comprend la purification de la boisson base à travers une résine échangeuse de cations.

4. Le procédé conforme à la revendication 1, dans lequel la purification de la boisson base au moyen d'une résine échangeuse d'ions comprend la purification de la boisson base à travers une résine anionique.

5. Le procédé conforme à la revendication 1, dans lequel la purification de la boisson base au moyen d'une résine échangeuse d'ions comprend la purification de la boisson base à travers une résine échangeuse de cations et une résine anionique.

6. Le procédé conforme à la revendication 2, dans lequel la teneur en alcool de la boisson purifiée n'est pas sensiblement différente de la teneur en alcool de la boisson base contenant de l'alcool.

7. Le procédé conforme à la revendication 1, dans lequel la matière adsorbante comprend une matière sélectionnée dans le groupe composé de résine absorbante, charbon de bois et charbon activé.

8. Le procédé conforme à la revendication 1, comprenant en outre la production d'une boisson moyennant l'adjonction de matières dans la boisson purifiée.

9. Le procédé conforme à la revendication 1, dans lequel :
la filtration de la boisson base forme un premier perméat et un premier rétentat ;
l'envoi dudit premier perméat à travers la matière d'échange ionique forme un deuxième perméat et un premier éluat ;
l'envoi dudit deuxième perméat à travers la matière adsorbante ou la matière absorbante forme un troisième perméat et un deuxième éluat.

10. Le procédé conforme à la revendication 9, dans lequel la boisson base est une boisson base contenant de l'alcool.

11. Le procédé conforme à la revendication 9, dans lequel la matière d'échange ionique comprend une matière sélectionnée dans le groupe formé d'une matière d'échange cationique et d'une matière d'échange ionique.

12. Le procédé conforme à la revendication 9, dans lequel la matière d'échange ionique comprend une matière d'échange cationique et une matière d'échange anionique.

13. Le procédé conforme à la revendication 9, dans lequel la matière adsorbante comprend une matière sélectionnée dans le groupe comprenant du charbon de bois, du charbon activé, et des mélanges de charbon de bois et de charbon activé.

14. Le procédé conforme à la revendication 9, dans lequel la matière adsorbante comprend à la fois une résine adsorbante et une matière sélectionnée dans le groupe de matières comprenant du charbon de bois, du charbon activé, et des mélanges de charbon de bois et de charbon activé.

15. Le procédé conforme à la revendication 9, comprenant l'opération suivante :
rétention dudit rétentat.

16. Le procédé conforme à la revendication 9, comprenant l'opération suivante :
rétention dudit premier éluat.

17. Le procédé conforme à la revendication 9, comprenant l'opération suivante :
rétention dudit deuxième éluat.

18. Le procédé conforme à la revendication 2, dans lequel la boisson base comprend des sucres non fermentescibles, des ions métalliques, des groupes d'acides et des composés aromatiques,
dans lequel l'opération de filtrage de la boisson base par filtration de taille moléculaire est effective pour extraire une partie substantielle des sucres non fermentescibles de la boisson base,
dans lequel l'opération de purification de la boisson base à l'aide de la matière d'échange ionique est efficace pour éliminer une partie substantielle des ions métalliques et des groupes d'acides de la boisson base,
et dans lequel ladite opération de purification de la boisson base à travers la matière sélectionnée dans le groupe composé d'une matière adsorbante, d'une matière absorbante, d'une matière bivalente et de combinaisons de ces dernières est effective pour extraire, de la boisson base, une partie substantielle des composés aromatiques .
